# EUROPEAN PATENT APPLICATION

(11) **EP 4 407 579 A2**
(43) Date of publication of application: **31.07.2024**
(21) Application number: 23209893.9
(22) Date of filing: 14.11.2023
(51) Int. Cl.: G08B 17/12

(54) **METHODS, APPARATUSES, AND SYSTEMS FOR CONFIGURING A FLAME ZONE DETECTING APPARATUS**

(30) Priority: 25.01.2023 IN 202311005059
(71) Applicant: Honeywell Analytics Inc., Charlotte, NC 28202 (US)
(72) Inventor: TRIPATHY, Janmejaya, Charlotte, 28202 (US); R, Ranjith Narayanan, Charlotte, 28202 (US)
(74) Representative: Haseltine Lake Kempner LLP

(57) **Abstract**

Methods, apparatuses and systems for detecting a flame zone are provided. The flame zone detecting apparatus includes a controller component; and at least one flame zone detecting component in electronic communication with the controller component. Each of the at least one flame zone detecting component comprises a freeform mirror, a micro-electro-mechanical system (MEMS) mirror, and a sensor, and the controller component is configured to: reflect an incoming optical signal by a reflecting surface of the freeform mirror; reflect the incoming optical signal reflected by the freeform mirror by a reflecting surface of the MEMS mirror; detect the incoming optical signal reflected by the MEMS mirror by the sensor; and determine a flame zone according to the incoming optical signal.

## Description

### FIELD OF THE INVENTION

Exemplary embodiments of the present disclosure relate generally to flame zone detecting apparatuses, and more particularly, to methods, apparatuses, and systems for detecting multiple fire and flame zones or positions.

### BACKGROUND

Flame zone detecting apparatuses may be present in environments where there is a possibility of fire. The flame zone detecting apparatuses may comprise flame zone detecting components (e.g., optical mirrors, optical lens, and optical sensors) configured to monitor a field of view and generate alerts or alarms based on detected environmental conditions. Many flame zone detecting apparatuses are plagued by technical challenges and limitations. Through applied effort, ingenuity, and innovation, many of these identified problems have been solved by developing solutions that are included in embodiments of the present disclosure, many examples of which are described in detail herein.

### BRIEF SUMMARY

Various embodiments described herein relate to methods, apparatuses, and systems for configuring an apparatus, for example a flame zone detecting apparatus.

In accordance with various examples of the present disclosure, an apparatus is provided. The apparatus may comprise a controller component; and at least one flame zone detecting component in electronic communication with the controller component. Each of the at least one flame zone detecting component comprises a freeform mirror, a micro-electro-mechanical system (MEMS) mirror, and a sensor, and the controller component is configured to: control a reflecting surface of the freeform mirror to reflect an incoming optical signal; control a reflecting surface of the MEMS mirror to reflect the incoming optical signal reflected by the freeform mirror; detect the incoming optical signal reflected by the MEMS mirror by the sensor; and determine a flame zone according to the incoming optical signal.

In some embodiments, the freeform mirror is an on-axis or an off-axis mirror, and each of the at least one flame zone detecting component further comprises a lens located between the MEMS mirror and the sensor and configured to focus the incoming optical signal reflected by the MEMS mirror to the sensor.

In some embodiments, the lens is a converging lens.

In some embodiments, each of the at least one flame zone detecting component further comprises: a slit located between the lens and the sensor and configured to adjust an amount of light of the incoming optical signal to enter the sensor.

In some embodiments, each of the at least one flame zone detecting component further comprises: a beam shifting indicator located between the lens and the slit and configured to indicate a beam shifting of the incoming optical signal.

In some embodiments, the controller component is further configured to rotate the MEMS mirror, such that the at least one flame zone detecting component is able to scan a field of view (FOV) of the at least one flame zone detecting component.

In some embodiments, determining the flame zone according to the incoming optical signal includes: detecting if a flame event occurred according to the incoming optical signal; and determining the flame zone according to the incoming optical signal in an instance in which the flame event is detected.

In some embodiments, detecting if the flame event occurred according to the incoming optical signal includes: comparing the incoming optical signal with a flame event detection database; and determining whether the incoming optical signal indicates a presence of the flame event.

In some embodiments, comparing the incoming optical signal with the flame event detection database includes: generating an intensity spectrum of the incoming optical signal; and comparing the intensity spectrum of the incoming optical signal with the flame event detection database.

In some embodiments, the controller component is further configured to trigger a flame alarm corresponding to the flame zone.

In accordance with various examples of the present disclosure, a method for detecting a flame zone by a controller component is provided. The method may comprise scanning a target zone of at least one flame zone detecting component; receiving an incoming optical signal from the target zone; comparing the incoming optical signal with a flame event database; determining whether a flame event occurs according to the comparison of the incoming optical signal with the flame event database.

The foregoing illustrative summary, as well as other exemplary objectives and/or advantages of the disclosure, and the manner in which the same are accomplished, are further explained in the following detailed description and its accompanying drawings.

### BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1A illustrates an example flame zone detecting component in accordance with various embodiments of the present disclosure;
FIG. 1B is a block diagram of an example flame zone detecting apparatus in accordance with various embodiments of the present disclosure;
FIG. 2A is a schematic diagram depicting an example FOV scanning mode in accordance with various embodiments of the present disclosure;
FIG. 2B is a schematic diagram depicting an example FOV scanning mode in accordance with various embodiments of the present disclosure;
FIG. 2C is a schematic diagram depicting an example FOV scanning mode in accordance with various embodiments of the present disclosure;
FIG. 2D is a schematic diagram depicting an example FOV scanning mode in accordance with various embodiments of the present disclosure;
FIG. 3 is a block diagram of an example flame zone detecting apparatus in accordance with various embodiments of the present disclosure; and
FIG. 4 is a flowchart diagram illustrating example operations in accordance with various embodiments of the present disclosure.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

The components illustrated in the figures represent components that may or may not be present in various embodiments of the present disclosure described herein such that embodiments may include fewer or more components than those shown in the figures while not departing from the scope of the present disclosure. Some components may be omitted from one or more figures or shown in dashed line for visibility of the underlying components.

The phrases "in an example embodiment," "some embodiments," "various embodiments," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such components or features may be optionally included in some embodiments, or may be excluded.

The terms "electronically coupled" or "in electronic communication with" in the present disclosure refer to two or more electrical elements (for example, but not limited to, an example processing circuitry, communication module, input/output module, memory, flame zone detecting component) and/or electric circuit(s) being connected through wired means (for example but not limited to, conductive wires or traces) and/or wireless means (for example but not limited to, wireless network, electromagnetic field), such that data and/or information (for example, electronic indications, signals) may be transmitted to and/or received from the electrical elements and/or electric circuit(s) that are electronically coupled.

The term "electromagnetic radiation" or "radiation" may refer to various kinds of electromagnetic radiant energy that exhibits properties of waves and particles including visible light, radio waves, microwaves, infrared (IR), ultraviolet (UV), X-rays and gamma rays. Visible light may refer to electromagnetic radiation that can be detected by a human eye. The electromagnetic spectrum comprises a range of all known types of electromagnetic radiation, including electromagnetic radiation that cannot be detected by the human eye. Various portions of the electromagnetic spectrum are associated with electromagnetic radiation that has certain characteristics (e.g., certain wavelengths and frequencies). For example, visible light emits electromagnetic radiation with wavelengths ranging between 380 and 750 nanometers (nm). In contrast, IR electromagnetic radiation may comprise wavelengths ranging between 0.7 and 5 microns.

A fire source produces electromagnetic radiation with certain characteristics. For example, flames associated with a fire source may emit electromagnetic radiation with particular IR, visible light and UV characteristics/properties (e.g., wavelengths, frequencies, and/or the like). These characteristics and properties may depend on characteristics of the fire source (e.g., fuel type). By way of example, flames generated by a hydrocarbon fuel source may emit IR radiation with a frequency between 2.7 microns and 4.5 microns and a UV signal with a frequency of 0.2 microns. While the visible light radiation produced by a fire can be perceived visually (e.g., as red and yellow flames), the IR and UV radiation cannot be detected by the human eye.

Flame zone detecting apparatuses may be configured to monitor a field of view and generate alerts or alarms and/or activate a fire suppression system based on detected environmental conditions. An example flame zone detecting apparatus may include optical components to reflect or concentrate the incoming optical signal to improve the signal strength of the incoming optical signal, reduce the noise of the incoming optical signal, and increase a size of the field of view of the flame zone detecting apparatus. In some embodiments, the flame zone detecting apparatuses may be configured to identify the flame zones or the flame incidents according to the incoming optical signal. In some embodiments, flame zone detecting apparatuses may be required and/or installed in environments where there is a high likelihood of a fire and/or where certain types of combustible materials are utilized or stored. For example, flame zone detecting apparatuses may be required at power plants, chemical storage and production facilities, hydrocarbon facilities or the like.

In general, a flame zone detecting apparatus may comprise at least one flame zone detecting component for detecting radiation (e.g., flames) within a field of view of the flame zone detecting apparatus. An example field of view may be or define a coverage area, range and/or angle of view in a vicinity of the flame zone detecting apparatus. In various embodiments, the field of view of a flame zone detecting apparatus may be manually and/or programmatically adjustable. For example, the field of view may be manually adjustable by directing (e.g., pointing) the flame zone detecting component in a direction of a likely source of fire within an environment. Additionally and/or alternatively, the field of view may be a programmatically selected distance or range (e.g., 15 meters, 30 meters, 45 meters or 60 meters). The example flame zone detecting apparatus may be configured to identify radiation characteristics (e.g., a modulation rate or flicker rate) associated with a fire source. The flame zone detecting apparatus may store information (e.g., algorithms) such that it can process received information in order to identify radiation associated with fire sources. An example flame zone detecting component may be or comprise an optical component, for example, without limitation, a photodetector, an IR sensor, UV sensor, and/or the like. In some embodiments, the flame zone detecting apparatus may comprise combinations of flame zone detecting components.

In general, flame zone detecting apparatuses may be configured in the field using wired communication protocols such as Modbus, HART, RS485 and/or the like which require a cable to provide a communication channel between the flame zone detecting apparatus and a specialized control device. Additionally, end users are often unable to operate such control devices and may require a skilled technician in order to make even minor changes to configuration settings. As noted above, existing flame zone detecting apparatuses are not configured to wirelessly receive and transmit data/information and typically have no wireless functionalities such as Wi-Fi, Bluetooth, ZigBee or the like. Wireless functionalities are generally foregone due to technical challenges such as design limitations and difficulty meeting various safety and certification standards when such wireless functionalities are introduced. In some cases, for security reasons, regulations do no permit wireless functionality for flame zone detecting apparatuses due to safety concerns. Additionally, incorporating wireless functionalities in flame zone detecting apparatuses increases overall production costs and production complexity.

In accordance with various embodiments of the present disclosure, example methods, apparatuses and systems are provided.

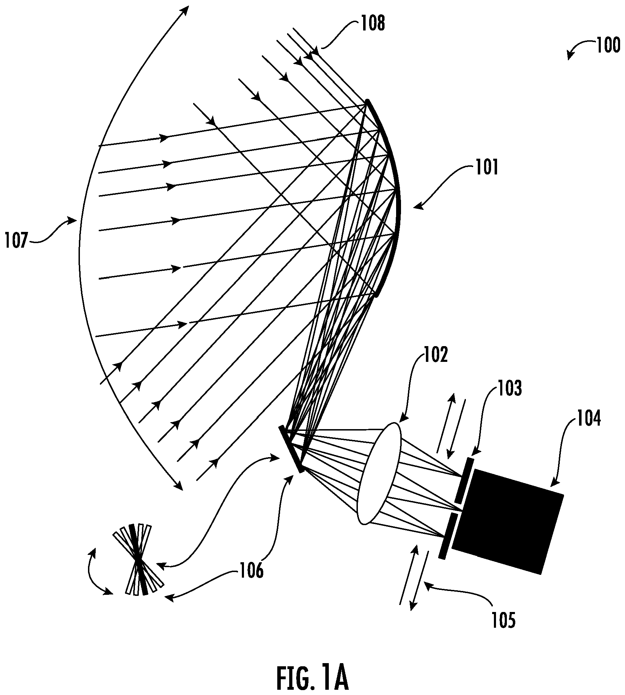

Referring now to FIG. 1A, an example schematic diagram depicts an example flame zone detecting component 100 in accordance with various embodiments of the present disclosure. In particular, the example flame zone detecting component 100 includes a freeform mirror 101, a micro-electro-mechanical system (MEMS) mirror 106, and a sensor 104.

In some embodiments, the freeform mirror 101 is configured to reflect an incoming optical signal 108 on a reflecting surface of the freeform mirror 101. For example, the freeform mirror 101 may be a refractive freeform mirror, a spherical lens, or an aspheric lens, configured to reflect the incoming optical signal 108. In some examples, the freeform mirror 101 may be coated with a reflective coating suitable for a maximum reflectivity in a spectrum range of the incoming optical signal 108. For example, the freeform mirror 101 may take the incoming optical signal 108 from a wide angle of field of view and concentrate the incoming optical signal 108 on the micro-electro-mechanical system (MEMS) mirror 106. In some embodiments, the freeform mirror 101 may be an off-axial mirror. In some embodiments, the freeform mirror 101 may be an on-axial mirror. In some embodiments, the freeform mirror 101 may be obscured.

In some embodiments, the micro-electro-mechanical system (MEMS) mirror 106 is configured to further reflect the incoming optical signal 108 reflected by the freeform mirror 101 on a reflecting surface of the MEMS mirror 106. For example, the reflecting surface of the MEMS mirror 106 may be coated with a reflective coating suitable for maximum reflectivity in the spectrum range of the incoming optical signal 108. For example, the micro-electro-mechanical system (MEMS) mirror 106 may be configured to tilt or rotate, such that the incoming optical signal 108 is reflected and concentrated on the sensor 104. In some examples, the micro-electro-mechanical system (MEMS) mirror 106 may be controlled by controlling parameters of the micro-electro-mechanical system (MEMS) mirror 106. For example, the controlling parameters of the micro-electro-mechanical system (MEMS) mirror 106 may include deflection angles of the MEMS mirror 106.

In some embodiments, the MEMS mirror 106 may be a single plane mirror in a circular shape or a rectangular shape. For example, the MEMS mirror 106 may be a mirror with a diagonal in a range from 0.01 mm to 1 mm, preferably in a range from 0.1 mm to 0.3 mm. In some embodiments, the MEMS mirror 106 may be a MEMS mirror matrix. For example, a MEMS mirror matrix may include a plurality of micro mirrors connected to an array chip. Each of the plurality of micro mirrors may have a diagonal in a range from 0.1 µm to 50 µm, preferably in a range from 2.5 µm to 10 µm. For example, each of the plurality of micro mirrors may be controlled independently by a controller component through the array chip to tilt or rotate, such that the incoming optical signal 108 is reflected and concentrated on the sensor 104.

In some embodiments, the micro-electro-mechanical system (MEMS) mirror 106 may be controlled by a controller component to locate a selected zone of the field of view.

In some embodiments, the sensor 104 is configured to detect the incoming optical signal 108 reflected by the MEMS mirror 106. For example, the sensor 104 may be a long wavelength infrared (LWIR) camera configured to detect one or more fire by products of the one or more fire. There are a plurality of byproducts of fire. One such byproduct of fire is carbon dioxide (CO₂). In some examples, the sensor 104 may be configured to detect infrared radiation peak that may be produced by the carbon dioxide byproduct of fire at wavelengths about 2 to 6 micron, more preferably 3.5 to 5 micron, and most preferably about 4.3 micron. Alternatively or additionally, water (H₂O) is also a byproduct of fire. In various embodiments herein, the sensor 104 may be configured to detect, in some examples, an infrared radiation emitted by the water byproduct of a fire to detect the fire. The infrared radiation emitted by the water byproduct of fire, in some examples, has a unique pattern/signature in the wavelength range of about 7 microns to about 8 microns. In various embodiments herein, the sensor 104 for detecting a fire event may use long wavelength infrared (LWIR) camera(s) with, in some examples, bandpass filters with passband between about 7 microns to about 14 microns.

In various embodiments, the sensor 104 may be configured to detect optical movement. For example, the sensor 104 may be an optical sensor to detect movement and directions of the movements.

In various embodiments, the sensor 104 may be a non-image sensor. For example, the non-image sensor does not produce any optical image of the source, such that privacy may be protected.

In some embodiment, the sensor 104 may include a plurality of sensor units distributed in an array. In some embodiment, the plurality of sensor units are photodetectors, and the photodetectors may convert an incoming optical signal 108 into an electrical signal. In some embodiments, an example sensor unit of the plurality of sensor units may be configured to detect the incoming optical signal from the selected zone of the field of view.

In some embodiments, the MEMS mirror 106 may be configured to rotate, such that the flame zone detecting component 100 is able to scan a field of view 107 of the flame zone detecting component and determine a flame zone based on the incoming optical signal 108.

As depicted in FIG. 1A, the flame zone detecting component 100 may further include a lens 102 located between the MEMS mirror 106 and the sensor 104. The lens 102 may be configured to focus the incoming optical signal 108 reflected by the MEMS mirror 106 on the sensor 104. For example, the lens 102 may be a converging lens, which is configured to focus the incoming optical signal 108 on the sensor 104.

In some embodiments, the flame zone detecting component 100 may further include at least one slit 103 located between the lens 102 and the sensor 104. For example, the at least one slit 103 is configured to allow the incoming optical signal 108 to pass through and be detected by the sensor 104. A width of each of the at least one slit 103 may determine the amount of light of the incoming optical signal 108 to be able to enter the sensor 104. For example, random reflection light may be minimized by using optical components, such as the freeform mirror 101, the MEMS mirror 106, the lens 102, and the slit 103. As such, false alarms due to the random reflection light may be avoided, in some examples.

In some embodiments, the flame zone detecting component 100 may further include a beam shifting indicator 105 located between the lens 102 and the at least one slit 103. For example, the beam shifting indicator 105 may be configured to monitor the beam shifting of the incoming optical signal 108.

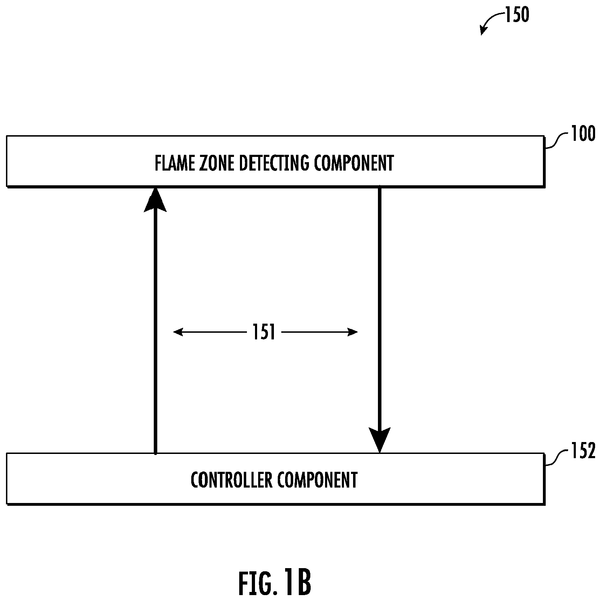

Referring now to FIG. 1B, an example schematic diagram depicting an example flame zone detecting apparatus 150 in accordance with various embodiments of the present disclosure is provided. As illustrated, the flame zone detecting apparatus 150 includes a flame zone detecting component 100 and a controller component 152. The flame zone detecting component 100 and the controller component 152 are in electronic communication with one another such that they can exchange data (e.g., receive and transmit data) with one another, defining a bi-directional communication channel 151. In particular, the flame zone detecting component 100 and the controller component 152 can transmit control signals including information (e.g., messages/control signals, electrical signals corresponding to the incoming optical signals) to one another.

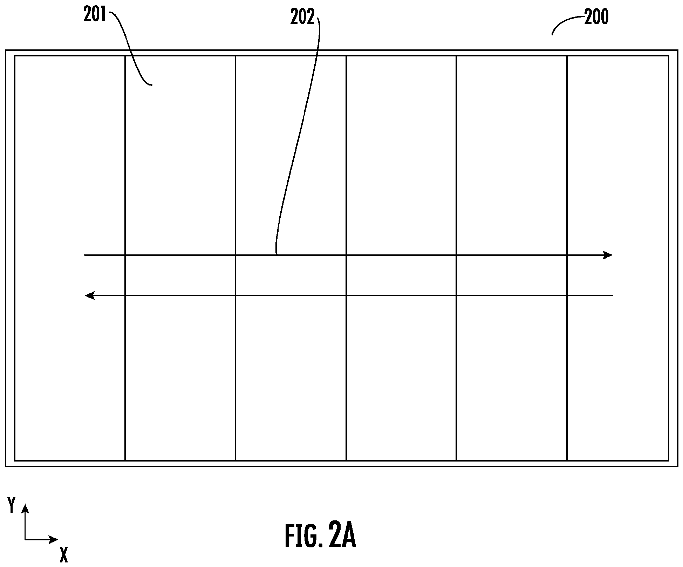

Referring now to FIGs. 2A-2D, schematic diagram depicting example FOV scanning modes in accordance with various embodiments of the present disclosure is provided. For example, the controller component 152 may actuate/rotate the MEMS mirror, such that the flame zone detecting apparatus 150 can traverse the FOV. For example, the flame zone detecting apparatus 150 can traverse and/or otherwise scan the FOV in incremental steps or in discrete steps. In some examples, the FOV may be customized by the controller component 152 in real time. For example, the FOV may be adjusted in real time by directing (e.g., pointing) the flame zone detecting component 100 in a direction of a likely source of a fire event.

As shown in FIG. 2A, an example FOV 200 may include a plurality of zones 201. For example, each of the plurality of zones 201 are continuous aligned in a horizonal direction X. In some embodiments, the MEMS mirror 106 may be configured to rotate in a one-dimension mode, such that the flame zone detecting component 100 is able to traverse and/or otherwise scan the FOV 200 along a scanning direction 202. In some embodiments, the plurality of zones 201 within the FOV 200 may be traversed and/or otherwise scanned in incremental steps. In some embodiments, the plurality of zones 201 within the FOV 200 may be traversed and/or otherwise scanned in discrete steps. In some embodiment, the sensor 104 may be configured to convert the incoming optical signal 108 into an electrical signal and the controller component 152 may be configured to receive the electrical signal.

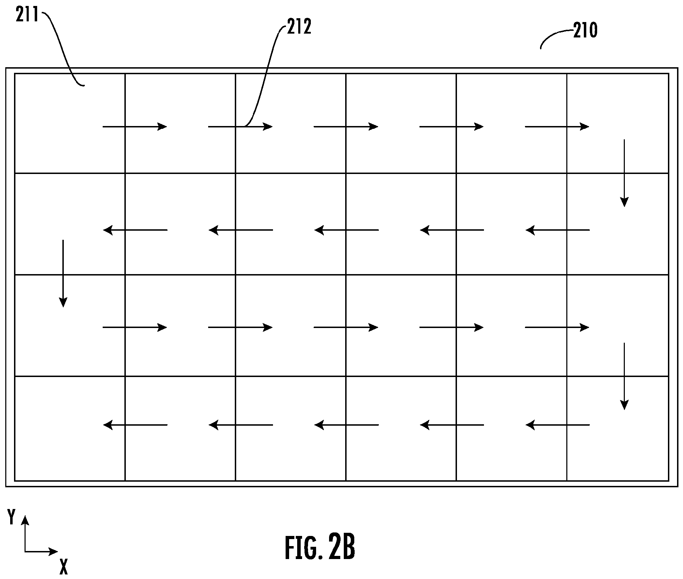

As shown in FIG. 2B, an example FOV 210 may include a plurality of zones 211. For example, the plurality of zones 211 are distributed in a two dimensional array. In some embodiments, the MEMS mirror 106 may be configured to rotate in a two-dimension mode, such that the flame zone detecting component 100 is able to traverse and/or otherwise scan the FOV 210 along a scanning direction 212 and cover each of the plurality of zones 211. In some embodiments, the plurality of zones 211 within the FOV 210 may be traversed and/or otherwise scanned in incremental steps. In some embodiments, the plurality of zones 211 within the FOV 210 may be traversed and/or otherwise scanned in discrete steps. In some embodiment, the sensor 104 may be configured to convert the incoming optical signal 108 into an electrical signal and the controller component 152 may be configured to receive the electrical signal.

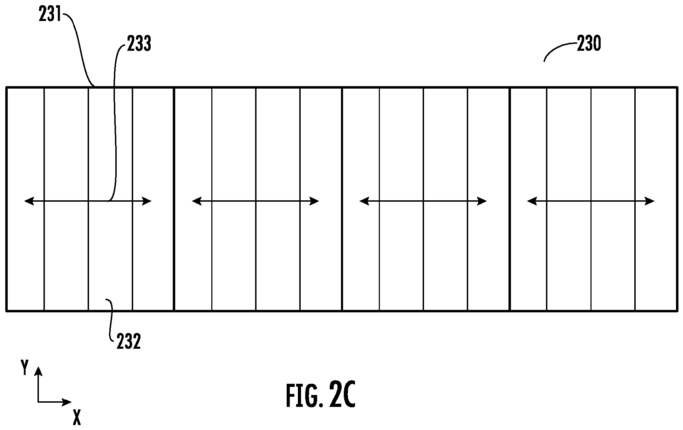

As shown in FIG. 2C, an example FOV 230 may include a plurality of sub-FOVs 231. For example, each of the plurality of sub-FOVs 231 are continuous and aligned in a horizonal direction X. In some embodiments, each of the plurality of sub-FOVs 231 may be traversed and/or otherwise scanned by the flame zone detecting component.

In some embodiments, a MEMS mirror 106 of the flame zone detecting component 100 may be configured to rotate in a one-dimension mode, such that the flame zone detecting component 100 is able to traverse and/or otherwise scan the plurality of sub-FOVs 231 along a scanning direction 233. In some embodiments, the sensor 104 may include a plurality of sensor units and one of the plurality of sensor units may be configured to convert an incoming optical signal 108 into an electrical signal and the controller component 152 may be configured to receive the electrical signal.

In some embodiments each of the plurality of sub-FOVs 231 may include a plurality of zones 232, and the plurality of zones 232 within each of the plurality of sub-FOVs 231 may be traversed and/or otherwise scanned in incremental steps. In some embodiments, the plurality of zones 232 within each of the plurality of sub-FOVs 231 may be traversed and/or otherwise scanned in discrete steps along the scanning direction 233. In some embodiment, an incoming optical signal 108 from each of the plurality of sub-FOVs 231 may be detected by a corresponding sensor unit and converted into an electrical signal, and the controller component 152 may be configured to receive the electrical signal.

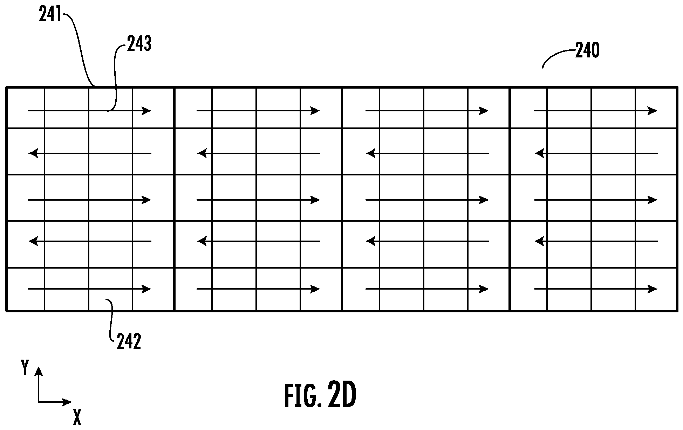

As shown in FIG. 2D, an example FOV 240 may include a plurality of sub-FOVs 241. For example, the plurality of sub-FOVs 241 are continuously aligned in a horizonal direction X. In some embodiments, each of the plurality of sub-FOVs 241 may be traversed and/or otherwise scanned by the flame zone detecting component 100. For example, a MEMS mirror 106 of the flame zone detecting component 100 may be configured to rotate in a one-dimension mode, such that the flame zone detecting component 100 is able to traverse and/or otherwise scan each of the plurality of sub-FOVs 241 along a scanning direction 243. In some embodiment, the sensor 104 may include a plurality of sensor units and one of the plurality of sensor units may be configured to convert an incoming optical signal 108 into an electrical signal and the controller component 152 may be configured to receive the electrical signal.

In some embodiments each of the plurality of sub-FOVs 241 may include a plurality of zones 242, and the plurality of zones 242 within each of the plurality of sub-FOVs 241 may be traversed and/or otherwise scanned in incremental steps. For example, the MEMS mirror 106 of the flame zone detecting component 100 may be configured to rotate in a two-dimension mode, such that the flame zone detecting component 100 is able to traverse and/or otherwise scan the plurality of zones 242 within each of the plurality of sub-FOVs 241 along a scanning direction 243. In some embodiments, the plurality of zones 242 within each of the plurality of sub-FOVs 241 may be traversed and/or otherwise scanned in discrete steps. In some embodiment, an incoming optical signal 108 from each of the plurality of sub-FOVs 241 may be detected by a corresponding sensor unit and converted into an electrical signal, and the controller component 152 may be configured to receive the electrical signal.

In various embodiments, the flame zone detecting component 100 may be configured to traverse and/or otherwise scan each of sub-FOVs of the FOV and the controller component 152 may determine at which of the sub-FOVs of the FOV a fire event occurs. The flame zone detecting component 100 may be further configured to traverse and/or otherwise scan each zone of the particular sub-FOV where the fire event occurs, such that the controller component 152 may determine at which zone the fire event occurs. The speed of detection of a fire event may be improved by using a plurality of sensor units to monitor sub-FOVs of the FOV and zones of each of the sub-FOVs independently.

In various embodiments, multiple fire events may be detected by the flame zone detecting component 100. For example, the controller component 152 may determine the exact zone of each of the multiple fire events according to the incoming optical signal 100 and controlling parameters of the MEMS mirror 106. Installation cost and power consumption cost may be lowered by using one flame zone detecting apparatus to detect multiple fire evens.

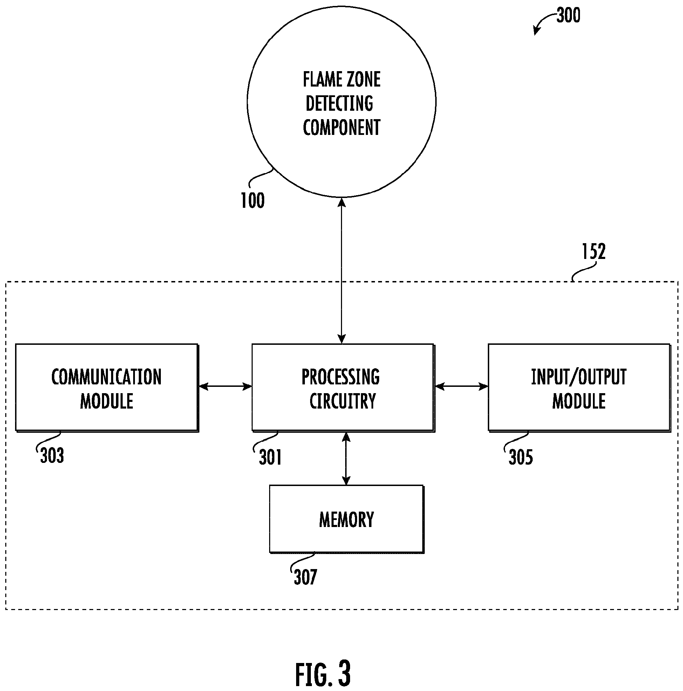

Referring now to FIG. 3, a schematic diagram depicting an example flame zone detecting apparatus 300 in accordance with various embodiments of the present disclosure is provided. As shown, the flame zone detecting apparatus 300 includes a flame zone detecting component 100 and a controller component 152 in electronic communication with the flame zone detecting component 100. The controller component 152 includes processing circuitry 301, a communication module 303, input/output module 305, a memory 307 and/or other components configured to perform various operations, procedures, functions or the like described herein.

As shown, the controller component 152 (such as the processing circuitry 301, communication module 303, input/output module 305 and memory 307) is electrically coupled to and/or in electronic communication with a flame zone detecting component 100. As depicted, flame zone detecting component 100 may exchange (e.g., transmit and receive) data with the processing circuitry 301 of the controller component 152.

The processing circuitry 301 may be implemented as, for example, various devices including one or a plurality of microprocessors with accompanying digital signal processors; one or a plurality of processors without accompanying digital signal processors; one or a plurality of coprocessors; one or a plurality of multi-core processors; one or a plurality of controllers; processing circuits; one or a plurality of computers; and various other processing elements (including integrated circuits, such as ASICs or FPGAs, or a certain combination thereof). In some embodiments, the processing circuitry 301 may include one or more processors. In one exemplary embodiment, the processing circuitry 301 is configured to execute instructions stored in the memory 307 or otherwise accessible by the processing circuitry 301. When executed by the processing circuitry 301, these instructions may enable the controller component 152 to execute one or a plurality of the functions as described herein. No matter whether it is configured by hardware, firmware/software methods, or a combination thereof, the processing circuitry 301 may include entities capable of executing operations according to the embodiments of the present invention when correspondingly configured. Therefore, for example, when the processing circuitry 301 is implemented as an ASIC, an FPGA, or the like, the processing circuitry 301 may include specially configured hardware for implementing one or a plurality of operations described herein. Alternatively, as another example, when the processing circuitry 301 is implemented as an actuator of instructions (such as those that may be stored in the memory 307), the instructions may specifically configure the processing circuitry 301 to execute one or a plurality of algorithms and operations described herein, such as those discussed with reference to FIG. 5.

The memory 307 may include, for example, a volatile memory, a non-volatile memory, or a certain combination thereof. Although illustrated as a single memory in FIG. 3, the memory 307 may include a plurality of memory components. In various embodiments, the memory 307 may include, for example, a hard disk drive, a random access memory, a cache memory, a flash memory, a Compact Disc Read-Only Memory (CD-ROM), a Digital Versatile Disk Read-Only Memory (DVD-ROM), an optical disk, a circuit configured to store information, or a certain combination thereof. The memory 307 may be configured to store information, data, application programs, instructions, and etc., so that the controller component 152 can execute various functions according to the embodiments of the present disclosure. For example, in at least some embodiments, the memory 307 is configured to cache input data for processing by the processing circuitry 301. Additionally or alternatively, in at least some embodiments, the memory 307 is configured to store program instructions for execution by the processing circuitry 301. The memory 307 may store information in the form of static and/or dynamic information. When the functions are executed, the stored information may be stored and/or used by the controller component 152.

The communication module 303 may be implemented as any apparatus included in a circuit, hardware, a computer program product or a combination thereof, which is configured to receive and/or transmit data from/to another component or apparatus. The computer program product includes computer-readable program instructions stored on a computer-readable medium (for example, the memory 307) and executed by a controller component 152 (for example, the processing circuitry 301). In some embodiments, the communication module 303 (as with other components discussed herein) may be at least partially implemented as the processing circuitry 301 or otherwise controlled by the processing circuitry 301. In this regard, the communication module 303 may communicate with the processing circuitry 301, for example, through a bus. The communication module 303 may include, for example, antennas, transmitters, receivers, transceivers, network interface cards and/or supporting hardware and/or firmware/software, and is used for establishing communication with another apparatus. The communication module 303 may be configured to receive and/or transmit any data that may be stored by the memory 307 by using any protocol that can be used for communication between apparatuses. The communication module 303 may additionally or alternatively communicate with the memory 307, the input/output module 305 and/or any other component of the controller component 152, for example, through a bus.

In some embodiments, the controller component 152 may include an input/output module 305. The input/output module 305 may communicate with the processing circuitry 301 to receive instructions input by the user and/or to provide audible, visual, mechanical or other outputs to the user. Therefore, the input/output module 305 may be in electronic communication with supporting devices, such as a keyboard, a mouse, a display, a touch screen display, and/or other input/output mechanisms. Alternatively, at least some aspects of the input/output module 305 may be implemented on a device used by the user to communicate with the controller component 152. The input/output module 305 may communicate with the memory 307, the communication module 303 and/or any other component, for example, through a bus. One or a plurality of input/output modules and/or other components may be included in the controller component 152.

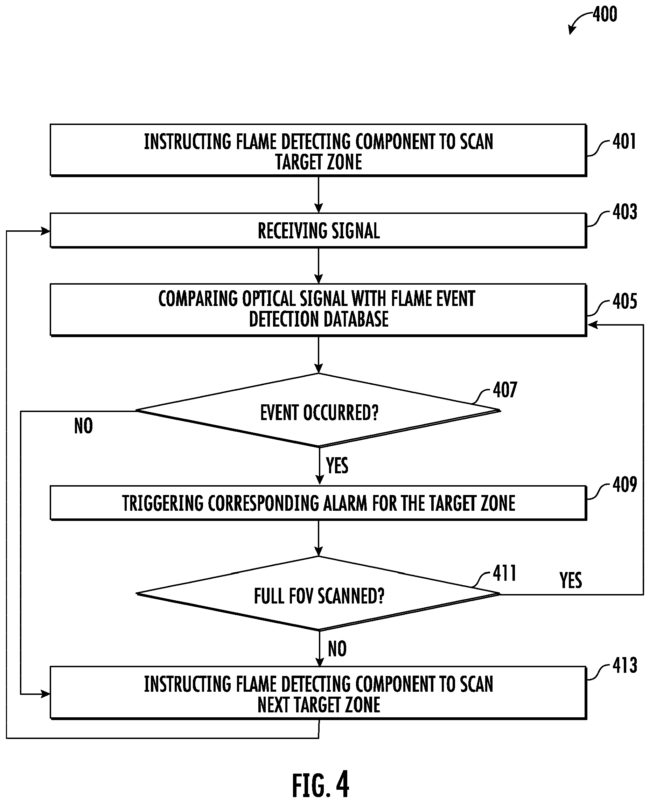

Referring now to FIG. 4, a flowchart diagram illustrating an example method 400, in accordance with various embodiments of the present disclosure is provided.

As depicted in FIG. 4, in some examples, the method 400 may be performed by a processing circuitry (for example, but not limited to, an application-specific integrated circuit (ASIC), a central processing unit (CPU)). In some examples, the processing circuitry may be electrically coupled to and/or in electronic communication with other circuitries of the example apparatus, such as, but not limited to, a flame zone detecting component, an indication element, a IR source element, a memory (such as, for example, random access memory (RAM) for storing computer program instructions), and/or a display circuitry (for rendering information on a display).

In some examples, one or more of the procedures described in FIG. 4 may be embodied by computer program instructions, which may be stored by a memory (such as a non-transitory memory) of a system employing an embodiment of the present disclosure and executed by a processing circuitry (such as a processor) of the system. These computer program instructions may direct the system to function in a particular manner, such that the instructions stored in the memory circuitry produce an article of manufacture, the execution of which implements the function specified in the flow diagram step/operation(s). Further, the system may include one or more other circuitries. Various circuitries of the system may be electronically coupled between and/or among each other to transmit and/or receive energy, data and/or information.

In some examples, embodiments may take the form of a computer program product on a non-transitory computer-readable storage medium storing computer-readable program instruction (e.g., computer software). Any suitable computer-readable storage medium may be utilized, including non-transitory hard disks, CD-ROMs, flash memory, optical storage devices, or magnetic storage devices.

At step/operation 401 of the example method 400, a processing circuitry (such as, but not limited to, the processing circuitry 301 of the controller component 152 illustrated in connection with FIG. 3, discussed above) instructs or otherwise causes a flame zone detecting component 100 to traverse and/or otherwise scan a target zone. For example, the target zone may be one of the plurality of zone 201 as illustrated in FIG. 2A. For example, the target zone may be one of the plurality of zones 211 as illustrated in FIG. 2B.

At step/operation 403 of the example method 400, the processing circuitry (such as, but not limited to, the processing circuitry 301 of the controller component 152 illustrated in connection with FIG. 3, discussed above) receives an incoming optical signal 108 through a sensor 104 of a flame zone detecting component 100. For example, the incoming optical signal 108 may be reflected by a reflecting surface of a freeform mirror 101. For example, the incoming optical signal 108 may be further reflected by a reflecting surface of a MEMS mirror 106. The incoming optical signal 108 may be further focused by a lens 102 on the sensor 104 and detected by the sensor 104. The controller component 152 may receive an electrical signal corresponding to the incoming optical signal 108 from the sensor.

In some embodiments, the MEMS mirror 106 may be configured to rotate, such that the flame zone detecting component 100 is able to traverse and/or otherwise scan a field of view 107 of the flame zone detecting component and determine a flame zone based on the incoming optical signal 108. In some embodiments, the controller component 152 may rotate the MEMS mirror by varying a control signal to the MEMS mirror. In some embodiments, the MEMS mirror 106 may be a single plane mirror. In some embodiments, the MEMS mirror 106 may be a MEMS mirror matrix.

In some embodiments, the MEMS mirror 106 may be connected to a fixture that allow it to rotate/tilt on a single axis or biaxially. For example, the MEMS mirror 106 may be configured to rotate/tilt on a single axis, such that the flame zone detecting component 100 may scan a field of view 200 as shown in FIG. 2A. For example, the MEMS mirror 106 may be configured to rotate/tilt biaxially, such that the flame zone detecting component 100 may traverse and/or otherwise scan a field of view 210 as shown in FIG. 2B. For example, the MEMS mirror 106 may be configured to rotate/tilt on a single axis, such that the flame zone detecting component 100 may traverse and/or otherwise scan multiple sub-FOVs 231 of a field of view 230 as shown in FIG. 2C. For example, the MEMS mirror 106 may be configured to rotate/tilt biaxially, such that the flame zone detecting component 100 may traverse and/or otherwise scan multiple sub-FOVs 241 of a field of view 240 as shown in FIG. 2D.

In some embodiments, the MEMS mirror 106 may be programmed to locate each zone of the FOV. For example, each zone of the FOV may be identified by a rotated angle of the MEMS mirror 106.

At step/operation 405 of the example method 400, the processing circuitry (such as, but not limited to, the processing circuitry 301 of the controller component 152 illustrated in connection with FIG. 3, discussed above) compares the incoming optical signal 108 with example fire signals of a flame event detection database.

In various embodiments, an intensity spectrum may be generated according to the received signal corresponding to the incoming optical signal 108. In particular, fire generates byproducts including carbon dioxide (CO₂), water (H₂O), and carbon particles (soot). For example, due to the presence of carbon dioxide (CO₂), water (H₂O), and carbon particles (soot) byproduct in fire, there may be a distinguishing feature and/or signature in the intensity spectrum of fire. In some examples, this unique feature and/or signature may be caused by infrared absorption and/or emission of the water byproduct in fire.

According to various embodiments, when comparing the intensity spectrum of the received signal corresponding to the incoming optical signal 108 with an exemplary intensity spectrum of various fires, the distinguishing feature/signature may determine if a fire event may have occurred.

At step/operation 407 of the example method 400, the processing circuitry (such as, but not limited to, the processing circuitry 301 of the controller component 152 illustrated in connection with FIG. 3, discussed above) determines whether the incoming optical signal 108 indicates a presence of fire according to the comparation of the intensity spectrum of the received signal corresponding to the incoming optical signal 108 with the example intensity spectrum of fire signals of the flame event detection database. If the processing circuitry 301 of the controller component 152 determines that the incoming optical signal 108 indicates a presence of fire, the example method may proceed to step/operation 409. If the processing circuitry 301 of the controller component 152 determines that the incoming optical signal 108 does not indicate a presence of fire, the example method may proceed to step/operation 413.

At step/operation 409 of the example method 400, the processing circuitry (such as, but not limited to, the processing circuitry 301 of the controller component 152 illustrated in connection with FIG. 3, discussed above) triggers corresponding alarms for the target zone. For example, the corresponding alarms may be alerts, fire alarms, or a first suppression system for the target zone corresponding to the incoming optical signal 108.

At step/operation 411 of the example method 400, the processing circuitry (such as, but not limited to, the processing circuitry 301 of the controller component 152 illustrated in connection with FIG. 3, discussed above) determines whether the FOV has been traversed and/or otherwise scanned fully. If the processing circuitry 301 of the controller component 152 determines that the FOV has been traversed and/or otherwise scanned fully, the example method may proceed to step/operation 401 . If the processing circuitry 301 of the controller component 152 determines the FOV has not been traversed and/or otherwise scanned fully, the example method may proceed to step/operation 413. For example, as shown in FIG. 2A, an example FOV 200 may include a plurality of zones 201. For example, as shown in FIG. 2B, an example FOV 210 may include a plurality of zones 211. For example, as shown in FIG. 2C, an example FOV 230 may include a plurality of sub-FOVs 231, and each of the plurality of sub-FOVs 231 may include a plurality of zones 232. For example, as shown in FIG. 2D, an example FOV 240 may include a plurality of sub-FOVs 241, and each of the plurality of sub-FOVs 241 may include a plurality of zones 242.

At step/operation 413 of the example method 400, the processing circuitry (such as, but not limited to, the processing circuitry 301 of the controller component 152 illustrated in connection with FIG. 3, discussed above) instructs the flame zone detecting component 100 to traverse and/or otherwise scan a next target zone. For example, the next target zone may be one of the plurality of zone 201, which is located next to the target zone according to the scanning direction 202 as illustrated in FIG. 2A. For example, the next target zone may be one of the plurality of zone 211, which is located next to the target zone according to the scanning direction 212 as illustrated in FIG. 2B.

Many modifications and other embodiments of the present disclosure set forth herein will come to mind to one skilled in the art to which these embodiments pertain having the benefit of the teachings presented in the foregoing descriptions and the associated drawings. Therefore, it is to be understood that the disclosure are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A flame zone detecting apparatus comprising:
a controller component; and
at least one flame zone detecting component in electronic communication with the controller component, wherein each of the at least one flame zone detecting component comprises a freeform mirror, a micro-electro-mechanical system (MEMS) mirror, and a sensor, and the controller component is configured to:
control a reflecting surface of the freeform mirror to reflect an incoming optical signal;
control a reflecting surface of the MEMS mirror to reflect the incoming optical signal reflected by the freeform mirror;
detect the incoming optical signal reflected by the MEMS mirror through the sensor; and
determine a flame zone according to the incoming optical signal.

2. The flame zone detecting apparatus of claim 1, wherein:
the freeform mirror is an on-axis or an off-axis mirror, and
each of the at least one flame zone detecting component further comprises:
a lens located between the MEMS mirror and the sensor and configured to focus the incoming optical signal reflected by the MEMS mirror to the sensor.

3. The flame zone detecting apparatus of claim 2, wherein the lens is a converging lens.

4. The flame zone detecting apparatus of claim 2, wherein each of the at least one flame zone detecting component further comprises:
a slit located between the lens and the sensor and configured to adjust an amount of light of the incoming optical signal to enter the sensor.

5. The flame zone detecting apparatus of claim 4, wherein each of the at least one flame zone detecting component further comprises:
a beam shifting indicator located between the lens and the slit and configured to indicate a beam shifting of the incoming optical signal.

6. The flame zone detecting apparatus of claim 1, wherein the controller component is further configured to rotate the MEMS mirror, such that the at least one flame zone detecting component is able to scan a field of view (FOV) of the at least one flame zone detecting component.

7. The flame zone detecting apparatus of claim 1, wherein determining the flame zone according to the incoming optical signal includes:
detecting if a flame event occurred according to the incoming optical signal; and
determining the flame zone according to the incoming optical signal in an instance in which the flame event is detected.

8. The flame zone detecting apparatus of claim 7, wherein detecting if the flame event occurred according to the incoming optical signal includes:
comparing the incoming optical signal with a flame event detection database; and
determining whether the incoming optical signal indicates a presence of the flame event.

9. The flame zone detecting apparatus of claim 8, wherein comparing the incoming optical signal with the flame event detection database includes:
generating an intensity spectrum of the incoming optical signal; and
comparing the intensity spectrum of the incoming optical signal with the flame event detection database.

10. The flame zone detecting apparatus of claim 7, wherein the controller component is further configured to trigger a flame alarm corresponding to the flame zone.

11. A method for detecting a flame zone by a controller component, comprising:
scanning a target zone of at least one flame zone detecting component;
receiving an incoming optical signal from the target zone;
comparing the incoming optical signal with a flame event database; and
determining whether a flame event occurs according to the comparison of the incoming optical signal with the flame event database.

12. The method of claim 11, wherein the at least one flame zone detecting component is in electronic communication with the controller component, wherein each of the at least one flame zone detecting component comprises a freeform mirror and a micro-electro-mechanical system (MEMS) mirror, the freeform mirror is an on-axis or an off-axis mirror, and scanning the target zone of the at least one flame zone detecting component comprises:
reflecting the incoming optical signal by a reflecting surface of the freeform mirror; and
reflecting the incoming optical signal reflected by the freeform mirror by a reflecting surface of the MEMS mirror.

13. The method of claim 12, wherein:
each of the at least one flame zone detecting component further comprises a sensor, and receiving the incoming optical signal from the target zone comprises detecting the incoming optical signal reflected by the MEMS mirror by the sensor.

14. The method of claim 12, wherein each of the at least one flame zone detecting component further comprises:
a lens located between the MEMS mirror and the sensor and configured to focus the incoming optical signal reflected by the MEMS mirror to the sensor.

15. The method of claim 14, wherein each of the at least one flame zone detecting component further comprises:
a slit located between the lens and the sensor and configured to adjust an amount of light of the incoming optical signal to enter the sensor.
